# EUROPEAN PATENT SPECIFICATION

(11) **EP 0 795 459 B1**
(45) Date of publication and mention of the grant of the patent: **14.03.2001**
(21) Application number: 96830604.3
(22) Date of filing: 04.12.1996
(51) Int. Cl.: B62D 33/06, F16F 1/12

(54) **Levelling suspension device for a truck cab**
Nivellieraufhängungsvorrichtung für eine Lastkraftwagen-Kabine
Dispositif de suspension pour la mise à niveau d'une cabine d'un camion

(30) Priority: 13.03.1996 IT TO960187
(43) Date of publication of application: 17.09.1997
(73) Proprietor: IVECO FIAT S.p.A., 10156 Torino (IT)
(72) Inventor: Demichelis, Giorgio, 10154 Torino (IT); Diepold, Klaus, 89075 Ulm (DE); Spitz, Mario, 86381 Krumbach (DE)
(74) Representative: Notaro, Giancarlo

(56) References cited:
- EP-A- 0 318 438
- DE-B- 1 009 442
- FR-A- 383 897
- FR-E- 7 029
- GB-A- 967 859
- US-A- 3 049 359
- PATENT ABSTRACTS OF JAPAN vol. 009, no. 242 (M-417), 28 September 1985 & JP 60 094808 A (SHIYOUWA SEISAKUSHO:KK), 28 May 1985,
- PATENT ABSTRACTS OF JAPAN vol. 015, no. 267 (M-1133), 8 July 1991 & JP 03 090424 A (KAYABA IND CO LTD), 16 April 1991,

## Description

The present invention is directed to a levelling suspension device for a truck, cab adapted for levelling the cab laterally in case of differences in load on the two sides of the cab. Suspension devices for truck cabs are known, comprising at least one spring with a vertical axis arranged on each side of the cab, between a lower supporting structure and an upper abutment element which is connected to the cab structure (see EP-A-0 318 438).

In the known devices of the above indicated type, identical helical springs are used on the left and right side of the cab. Since generally the weight of the cab differs from one side to the other, the springs arranged on the side under heavier load are more compressed, which causes a laterally inclined attitude of the cab.

The object of the present invention is that of overcoming this drawback with simple and unexpensive means, while still using identical springs on the two sides of the cab and enabling also the attitude of the cab to be adjusted at will.

In view of achieving this object, the invention provides a suspension device for a truck cab of the type indicated at the beginning of the present description, characterised in that for at least one of said cab suspension springs, said upper abutment element is connected to the cab structure by screw-type connecting means for enabling an adjustment of the relative position along the vertical direction of said upper abutment element and the cab structured, and in that said screw-type connecting means comprise a vertical threaded stem connected at its upper end to the cab structure, an adjustment bush with inner and outer threads wound oppositely to each other, said bush being screwed both on said threaded stem, by means of its inner thread, and, by means of its outer thread, within an inwardly threaded sleeve which on its turn is connected to the upper abutment element of said spring, so that a rotation of said adjustment bush causes a movement in opposite directions of the upper abutment element of the spring and the threaded stem.

Due to these features, by rotating said adjustment sleeve, it is possible to cause a variation of the relative position of the upper abutment element of the spring and the cab structure. It is thus possible to move upwardly (or downwardly, depending upon the dimensions and any preceding adjustment) the cab structure away from, or towards the spring abutment element on the side of the cab which is subject to a greater load, so that, notwithstanding that on this side the spring is more compressed compared with the spring located on the opposite side, the cab is supported at the same height on both sides and therefore is not laterally inclined.

The invention will be now described with reference to the annexed drawings, given purely by way of non limiting example, in which:
figure 1 is a side view, partially in cross-section, of the lower front portion of a truck cab, with the suspension device according to the invention,
figure 2 is a cross-sectional view at an enlarged scale of the suspension device according to the invention at the right side of the cab, in a condition in which the upper abutment element of the spring is in contact with the cab floor,
figure 3 is a cross-sectional side view at an enlarged scale of the suspension device according to the invention at the left side of the cab, before the adjustment device provided thereon is operated, yet in the said condition in which the upper abutment element of the spring is in contact with the cab floor, and
figure 4 shows the same device of figure 3 in a condition following the actuation of the adjustment device, in which the upper abutment element of the spring is lowered with respect to the floor.

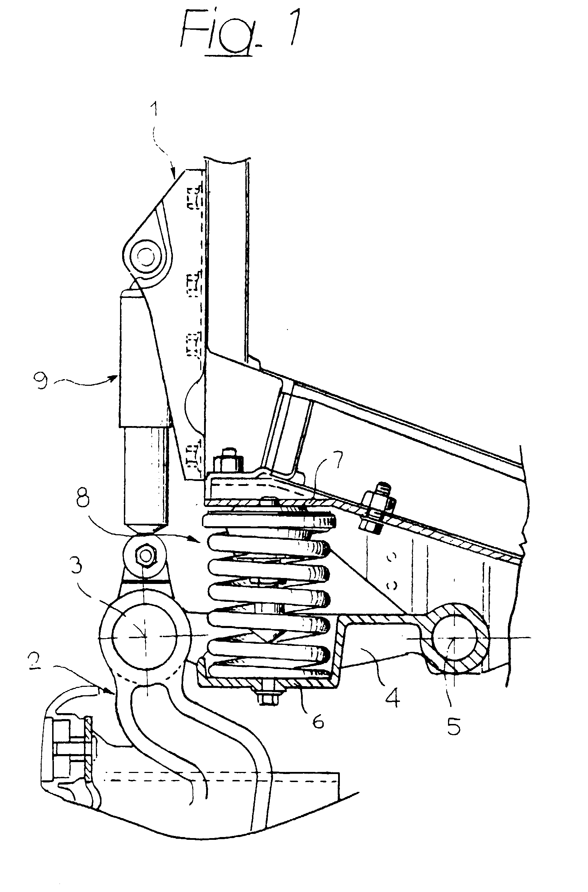

In figure 1, reference numeral 1 designates the lower front portion of a truck cab, in a side view. The structure 1 of the cab is mounted on a support 2 pivotally connected to the truck frame around a transverse axis 3, so as to allow, according to a technique well known in the art, a forward rotation of the cab around this axis for leaving access to the truck engine, which is located under the cab. The structure 1 of the cab is mounted on support 2 with the interposition of at least two springs 8 (one on the right side and the other on the left side of the cab) each of which has its lower end resting on an intermediate support 4 which is articulated around axis 3 to support 2 and is also articulated around an axis 5 to the cab structure 1.

Each helical spring 8, having a vertical axis, is interposed between a wall 6 of the respective support 4 and a wall 7 of the cab structure 1. The springs 8 are for example two or four and are distributed on the two sides of the longitudinal central axis of the motor-vehicle. The cab structure 1 is further connected to support 2 by one or more shock absorbers 9.

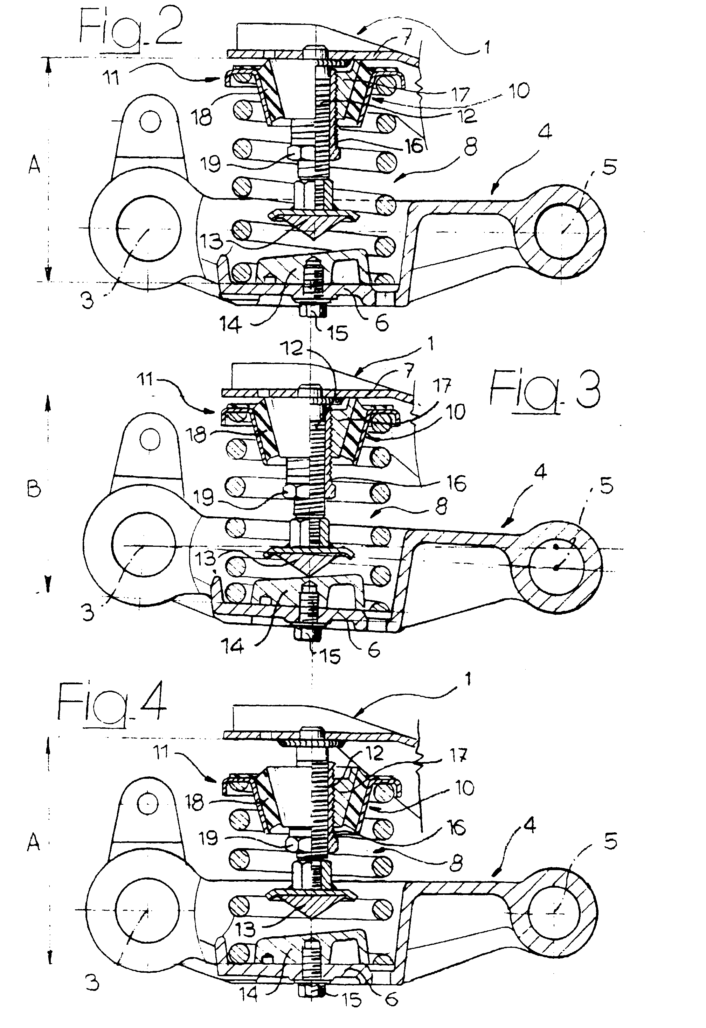

Figure 2 shows a cross-sectional view at one spring 8 located on the right side of the cab, which usually is subject to a lower load (in a vehicle with left-hand drive). As shown, the lower end of the helical spring 8 directly abuts against the wall 6 of support 4, whereas the upper end of spring 8 is in contact with an upper abutment element 10 in form of cup-shaped ring. The upper abutment element 10 is connected to the wall 7 of the truck cab 1 by screw-type connecting means generally designated by reference numeral 11. These means includes a vertical threaded stem 12, connected at its upper end to wall 7 and carrying at its lower end a rubber pad 13 which is for cooperation with a body 14 screwed to wall 6 by means of bolt 15, in order to define the lowermost end position of the cab 1. The screw-type connecting means 11 further includes an adjustment bush 16 which is threaded both on its inner and outer surfaces, the outer and inner threads being oppositely wound relative to each other. The adjustment bush 16 is screwed on the threaded stem 12 by its inner thread and is further screwed, by its outer thread, inside a sleeve 17, which is tapered outside and connected to the abutment element 10 with the interposition of an annular body 18 of elastomeric material. The bush 16 has on its outer surface a nut 19 formed at its lower end which is for engagement by an actuating tool.

Figures 3,4 show a suspension spring of the cab located on the left side of the cab, i.e. that which usually is subject to a greater load, in two different conditions, namely before and after an adjusting operation of the bush 16.

The operation of the device according to the invention is as follows.

As discussed above, figures 2,3 respectively show a spring located on the right side and a spring located on the left side of the cab. The spring 8 located on the left side (figure 3) is subject to a greater load, and therefore is more compressed, so that distance B, shown in figure 3, between the wall 6 of the base support 4 and the wall 7 of the cab is lower than distance A shown in figure 2 between these walls. In this situation, the cab has a laterally inclined attitude, since at its left side it is lowered by a distance C corresponding to the difference between distances A and B. To bring the cab back to its horizontal attitude, it is sufficient to operate the adjusting bush 16 associated with the left spring 8 (figure 3) so as to cause a rotation thereof. This rotation causes a movement in opposite directions of the threaded stem 12 and the abutment element 10. More precisely, the threaded stem 12 moves upwardly and the abutment element 10 moves downwardly so that the vertical distance between the abutment element 12 and the wall 7 of the cab 1 increases, as shown in figure 4. In the condition shown in figure 4, therefore, the wall 7 of the cab 1 returns to the height at which this wall is located on the right side of the cab (figure 2) notwithstanding that the left spring 8 is more compressed (figure 4) with respect to the right spring 8 (figure 2).

From the foregoing description, it is clearly apparent that in order to obtain the above described adjustment, it is not necessary that all the spring of the cab suspension are provided with the screw-type adjustment means which have been described above. Generally, it is indeed sufficient that this adjustment means are provided on the spring(s), which is (are) located on one side only of the cab.

As it is clearly apparent from the comparison of figures 3,4, the operation of the adjustment means associated with the left-hand spring 8 causes the pad 13 to be raised with respect to the body 14 at the left-hand side of the cab, so that the distance between the pad and wall 6 is identical both at the right-hand spring (s), and at the left-hand spring (s).

Naturally, while the principle of the invention remains the same, the details of construction and the embodiments may widely vary with respect to what has been described and illustrated purely by way of example.

## Claims

1. Levelling suspension device for a truck cab, adapted for levelling the cab laterally in case of differences in load on the two sides of the cab, said device comprising at least one spring having a vertical axis (8) on each side of the cab (1), between a lower supporting structure (6) and an upper abutment element (10) which is connected to the cab structure (1),
characterised in that, for at least one of said springs (8), said upper abutment element (10) is connected to the cab structure (1), by screw-type connecting means (11) for enabling an adjustment of the relative position along the vertical direction of said upper abutment element (10) and the cab structure (1), and in that said screw-type connecting means (11) include a vertical threaded stem (12) connected at its upper end to the cab structure (1), an adjustment bush (16) with outer and inner threads wound oppositely to each other, said adjustment bush (16) being screwed on said threaded stem (12) by its inner thread and being further screwed, by its outer thread, within an inwardly threaded sleeve (17) which on its turn is connected to said upper abutment element (10), so that a rotation of the adjustment bush (16) causes a movement in opposite directions of the upper abutment element (10) and the threaded stem (12).

2. Device according to claim 1, characterised in that the lower end of the threaded stem (12) carries a rubber pad (13) cooperating with a fixed stop element (14) to define the lowermost end position of the cab (1).

3. Device according to claim 1, characterised in that said upper abutment element (10) is connected to said inwardly threaded sleeve (17) with the interposition of an annular body (18) of elastomeric material.

## Patentansprüche

1. Nivellieraufhängungsvorrichtung für eine Lastkraftwagen-Kabine, die zur seitlichen Nivellierung der Kabine im Falle einer unterschiedlichen Beladung zu beiden Seiten der Kabine geeignet ist, wobei die Vorrichtung folgendes aufweist:
wenigstens eine Feder mit einer vertikalen Achse (8) an jeder Seite der Kabine (1) zwischen einer unteren Tragestruktur (6) und einem oberen Widerlagerelement (10), welches mit dem Kabinenaufbau (1) verbunden ist, dadurch gekennzeichnet, dass für wenigstens eine der Federn (8) das obere Widerlagerelement (10) durch Schraubverbindungsmittel (11) mit dem Kabinenaufbau (1) verbunden ist, um eine Einstellung der relativen Position entlang der vertikalen Richtung des oberen Widerlagerelements (10) und dem Kabinenaufbau (1) zu ermöglichen, und
dass die Schraubverbindungsmittel (11) eine vertikale Gewindespindel (12), die an ihrem oberen Ende mit dem Kabinenaufbau (1) verbunden ist, und eine Einstellhülse (16) mit gegensinningen Außen- und Innengewinden aufweisen, wobei die Einstellhülse (16) auf die Gewindespindel (12) mit ihrem Innengewinde geschraubt ist und außerdem mit ihrem Außengewinde in eine ein Innengewinde aufweisende Buchse (17) geschraubt ist, welche ihrerseits mit dem oberen Widerlagerelement (10) verbunden ist, so dass eine Drehung der Einstellhülse (16) eine Bewegung in entgegengesetzte Richtungen des oberen Widerlagerelements (10) und der Gewindespindel (12) erzeugt.

2. Vorrichtung nach Anspruch 1, dadurch gekennzeichnet, dass das untere Ende der Gewindespindel (12) ein Gummikissen (13) trägt, das mit einem feststehenden Anschlagelement (14) zusammenwirkt, um die untere Endposition der Kabine (1) zu definieren.

3. Vorrichtung nach Anspruch 1, dadurch gekennzeichnet, dass das obere Widerlagerelement (10) mit der ein Innengewinde aufweisenden Buchse (17) unter Zwischenschaltung eines ringförmigen Körpers (18) aus Elastomermaterial verbunden ist.

## Revendications

1. Dispositif de suspension et de réglage de niveau pour la cabine d'un camion, adapté pour régler le niveau de la cabine latéralement dans le cas où se produisent des différences dans le chargement sur les deux côtés de la cabine, ledit dispositif comprenant au moins un ressort ayant un axe vertical (8) sur chaque côté de la cabine (1), entre une structure de support inférieure (6) et un élément de butée supérieur (10) qui est connecté à la structure de la cabine (1),
caractérisé en ce que, pour l'un au moins desdits ressorts (8), ledit élément de butée supérieur (10) est connecté à la structure de la cabine (1) par des moyens de connexion du type à vis (11) pour permettre un ajustement de la position relative le long de la direction verticale dudit élément de butée supérieur (10) et de la structure de cabine (1), et en ce que lesdits moyens de connexion du type à vis (11) incluent une tige filetée verticale (12) connectée à son extrémité supérieure à la structure de cabine (1), une douille d'ajustement (16) présentant des pas de vis extérieur et intérieur avec des pas opposés l'un à l'autre, ladite douille d'ajustement (16) étant vissée sur ladite tige filetée (12) par son pas de vis intérieur et étant en outre vissée, par son pas de vis extérieur, dans un manchon (17) à pas de vis intérieur, lequel est à son tour connecté audit élément de butée supérieur (10), de telle manière qu'une rotation de la douille d'ajustement (16) provoque un mouvement de l'élément de butée supérieur (10) et de la tige filetée (12) dans des directions opposées.

2. Dispositif selon la revendication 1, caractérisé en ce que l'extrémité inférieure de la tige filetée (12) porte un coussinet de caoutchouc (13) qui coopère avec un élément d'arrêt fixe (14) pour définir la position finale la plus basse de la cabine (1).

3. Dispositif selon la revendication 1, caractérisé en ce que ledit élément de butée supérieur (10) est connecté audit manchon à pas de vis intérieur (17), avec interposition d'un corps annulaire (18) en matériau élastomère.
